# EUROPEAN PATENT APPLICATION

(11) **EP 2 852 128 A1**
(43) Date of publication of application: **25.03.2015**
(21) Application number: 13845672.8
(22) Date of filing: 05.07.2013
(51) Int. Cl.: H04M 1/02, H01Q 1/24, H01Q 1/44

(54) **PENDANT AND TERMINAL**

(30) Priority: 10.10.2012 CN 201210383278
(71) Applicant: Xiaomi Inc., Beijing 100085 (CN)
(72) Inventor: ZHANG, Lei, Beijing 100085 (CN); LIU, Zicheng, Beijing 100085 (CN); MAO, Zhu, Beijing 100085 (CN)
(74) Representative: Robson, Aidan John
(86) International application number: PCT/CN2013/078932
(87) International publication number: WO 2014/056334

(57) **Abstract**

Disclosed are a pendant and a terminal. The pendant comprises: a pendant body and a pendant rope, wherein an antenna is built in the pendant body, a radio-frequency cable of the antenna is embedded in the pendant rope, and a connection contact at the end of the pendant rope opposite the pendant body is in contact with an antenna contact on a terminal body, so that the antenna built in the pendant body is in communication with the terminal.According to the embodiments of the present invention, the problem of insufficient size of a circuit board caused by the antenna contact in the background art can be solved. Meanwhile, the thickness of a cell phone will not be increased.

## Description

### TECHNICAL FIELD

The present disclosure relates generally to wireless communication, and particularly to a pendant and a terminal.

### BACKGROUND

Antenna is essential for a terminal to realize wireless communication. A variety of antennae can be used to meet different requirements associated with frequencies, applications, situations and the like. In view of the position relation with terminal, antennae can be classified as two kinds, i.e., built-in antenna and external antenna.

Regarding to a mobile phone, the built-in antenna arrangement is typically achieved by making an internal antenna using a flexible printed circuit board (FPC), which is attached to the inside of a phone shell and connected to antenna contacts on a circuit board of the phone via brackets or pins, allowing the connection between the antenna and the antenna function circuit at the phone side.

However, in the current built-in antenna arrangement, a certain space for antenna contacts is needed to be reserved on the circuit board of the mobile phone, which may cause that there is no enough remaining space available. Especially, as the terminal becomes powerful increasingly, the room shortage problem of the circuit board caused by the antenna contacts is considerably rising. Furthermore, the built-in antenna inside the phone shell may lead to an increase of the thickness of the battery shell and thus the entire thickness of the mobile phone increased.

### SUMMARY

Provided herein is a pendant and a terminal, which is intended to solve the above room shortage problem of the circuit board caused by the antenna contacts and will not increase the thickness of a mobile phone.

In one aspect, the present disclosure provides a pendant, comprising a pendant body and a pendant cord, wherein an antenna is built in to the pendant body, RF cables of the antenna are embedded in the pendant cord, and connecting contacts on the end of the pendant cord away from the pendent body are contacted with antenna contacts in a terminal body, such that the antenna built in to the pendant body is communicated with the terminal.

For example, the pendant further comprises a first connecting component. The connecting contacts are disposed in the first connecting component, and the antenna contacts are disposed in a second connecting component of the terminal body, which is non-detachably connected to the first connecting component. The connecting contacts in the first connecting component are connected to the antenna contacts in the second connecting component through soldering.

For example, the pendant further comprises a first connecting component. The connecting contacts are disposed in the first connecting component, and the antenna contacts are disposed in a second connecting component of the terminal body, which is detachably connected to the first connecting component. The connecting contacts in the first connecting component will be contacted with the antenna contacts in the second connecting component, when the first and second connecting components are connected with each other.

For example, the detachable connection includes snap-fit, threading or plug-in engagement.

For example, the pendant further comprises a first connecting component. The connecting contacts are disposed in the first connecting component, and the antenna contacts are disposed in a second connecting component of the terminal body. The second connecting component is a data input/output interface of the terminal, and the first connecting component is a port corresponding to the data input/output interface. The connecting contacts in the first connecting component will be contacted with the antenna contacts in the second connecting component, when the first and second connecting components are connected with each other.

For example, the data input/output interface includes audio input/output interface, universal serial bus (USB) interface, firewire (IEEE 1394) interface or power interface.

For example, the antenna is a near field communication (NFC) antenna.

For example, the NFC antenna is arranged in the pendant body in manner of homocentric squares.

In another aspect, the present disclosure provides a terminal, comprising a terminal body and a pendant as described above.

For example, the terminal body has a second connecting component disposed in any one of the four corners thereof, and the antenna contacts in the second connecting component are disposed in the corner of a mainboard corresponding to the position of the second connecting component.

As can be seen, according to above embodiments of the present disclosure, the antenna is built in to the pendant body of a pendant, such that when the pendant is fixedly connected to the second connecting component of the terminal through the first connecting component, the connecting contacts in the first connecting component are contacted with the antenna in the second connecting component, which allows the communication between the antenna built in to the pendant body and the terminal. Thus, due to the built-in arrangement in a pendant separated from terminal, antenna can be disposed outside the terminal, which facilitates to solve the problem that antenna takes up room and will not increase the thickness of a mobile phone.

The foregoing summary is not intended to summarize each potential embodiment or every aspect of the present disclosure.

### BRIEF DESCRIPTION OF THE DRAWINGS

FIG. 1 is an illustrative schematic view showing the structure of one pendant according to Example 1 of the present disclosure.
FIG. 2 is an illustrative schematic view showing the structure of another pendant according to Example 1 of the present disclosure.
FIG. 3 is an illustrative schematic view showing the connecting relation between the first connecting component and the second connecting component according to Example 1 of the present disclosure.
FIG. 4 is an illustrative schematic view showing the structure of a terminal according to Example 2 of the present disclosure.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Hereinafter, the present disclosure will be illustrated in more details with reference to figures and examples, and these objects, features and advantages thereof will become more apparent and easily understood.

### Example 1

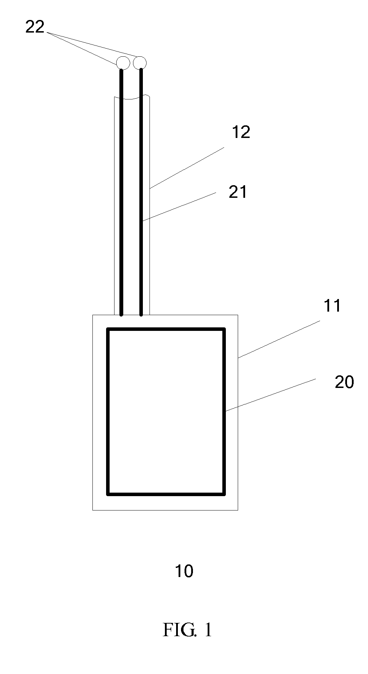

Referring to FIG. 1, a pendant 10 according to this example of the present disclosure comprises a pendant body 11 and a pendant cord 12.

An antenna 20 is built in to the pendant body 11, RF cables 21 of the antenna 20 are embedded in the pendant cord 12, and connecting contacts 22 on the end of the pendant cord 12 away from the pendent body 11 are contacted with antenna contacts in a terminal body (not shown in FIG. 1), such that the antenna 20 built in to the pendant body 11 is in communication with the terminal.

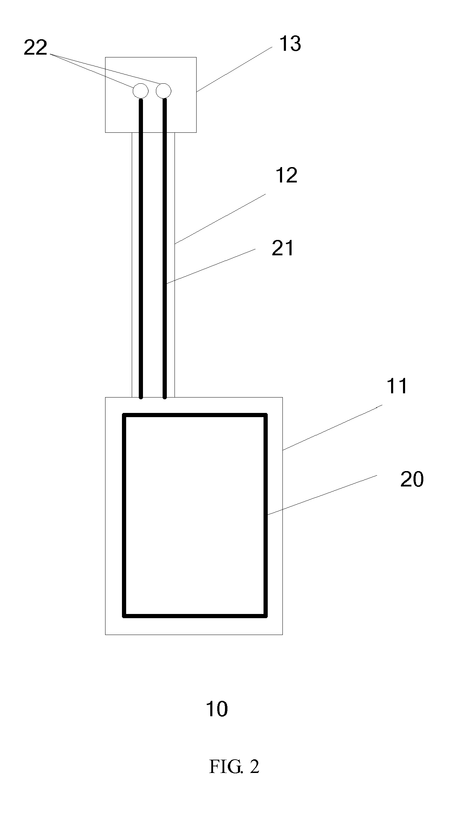

For example, referring to FIG. 2, the pendant 10 according to Example 1 further comprises a first connecting component 13, the connecting contacts 22 are disposed in the first connecting component 13, and the antenna contacts are disposed in a second connecting component (not shown in FIG. 2) of the terminal body, which is detachably or non-detachably connected to the first connecting component 13.

In the case that the second connecting component is non-detachably connected to the first connecting component 13, the connecting contacts 22 in the first connecting component 13 are connected to the antenna contacts in the second connecting component through soldering.

For example, the first connecting component 13 can be designed to be integral with the second connecting component, and the connecting contacts 22 in the first connecting component 13 can be welded to the antenna contacts in the second connecting component.

In another case that the second connecting component is detachably connected with the first connecting component 13, the connecting contacts 22 in the first connecting component 13 will be contacted with the antenna contacts in the second connecting component when the first connecting component 13 is in connection with the second connecting component.

For example, the detachable connection includes snap-fit, threading or plug engagement.

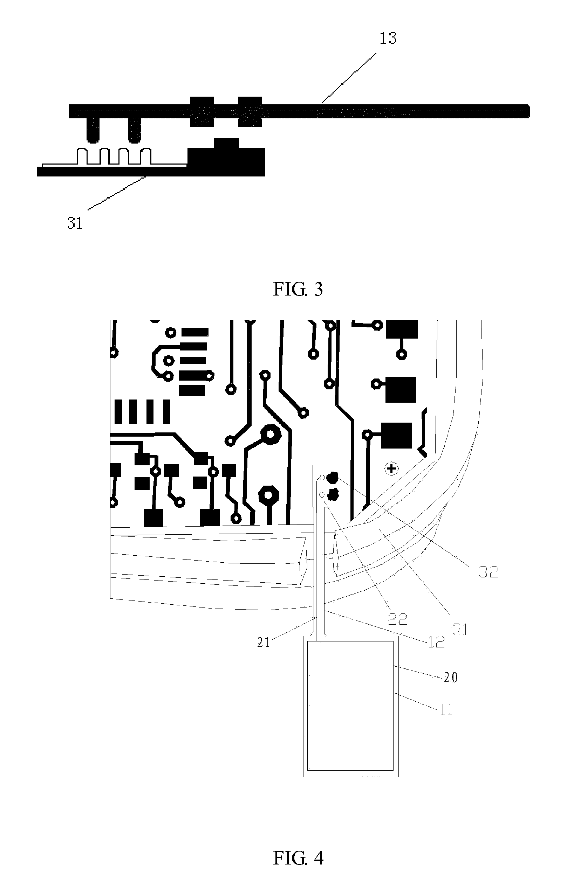

For example, a connecting relation between the first connecting component and the second connecting component according to this example is shown in FIG. 3, in which the first connecting component 13 is detachably connected to the second connecting component 31 by means of snap-fit.

The detachable connection is not specifically limited in the present disclosure, and any other means known in the art rather than the above mentioned detachable connection can be employed.

The detachable connection can also be achieved by using various data input/output interfaces in a terminal as the component connecting the pendant to the terminal, rather than using the dedicated detachable connection member mentioned above.

For example, a data input/output interface of the terminal is used as the second connecting component, and a port corresponding to the data input/output interface is used as the first connecting component 13. The connecting contacts 22 in the first connecting component 13 will be contacted with the antenna contacts in the second connecting component when the first connecting component 13 is in connection with the second connecting component.

For example, the data input/output interface includes audio input/output interface, universal serial bus (USB) interface, firewire (IEEE 1394) interface or power interface.

It should be noted that when a data input/output interface of the terminal is used as the second connecting component, it can be dedicatedly used to connect the first connecting component 13 and then to realize the communication between the antenna 20 built in to the pendant body 11 and the terminal. For example, one USB interface of a mobile phone can serve as the second connecting component, and the first connecting component 13 of the pendant 10 can be designed to be a port corresponding to the USB interface, which is dedicatedly used to connect the first connecting component 13 of the pendant 10. Alternatively, the data input/out interface is used not only to connect the pendant 10, but also to connect other external units of the terminal. In other words, the pendant 10 can share the data input/output interface with other external units, and the connection with the interface can be switched between the pendant 10 and other external units by using a controller. For example, an audio input/output interface of a mobile phone can serve as the second connecting component, and the first connecting component 13 of the pendant 10 can be designed to be a port corresponding to said interface. The audio input/output interface can be connected to the first connecting component 13 of the pendant 10 as well as a port of an earphone with the connection switched by a controller.

In this example, since the antenna 22 built in to the pendant 11 is arranged outside the terminal, to ensure its communication effect, a LF antenna is preferable.

Near Field Communication (NFC) is a set of short-range low frequency wireless communication technologies, allowing a contactless point to point data transmission between electronic devices with a working distance of 10 cm or less. Although NFC operates based on electromagnetic induction coupling at RF band just like Radio Frequency Identification (RFID), there are still significant differences between NFC and RFID. The working distance of NFC is shorter than that of RFID, which can be a few meters or even tens of meters. However, compared to RFID, NFC features short range, high bandwidth, low energy consumption and the like due to the unique signal attenuation model. NFC is compatible with Contactless Smart Card and is becoming a formal standard appreciated by more and more leading firms. Furthermore, NFC can allow various devices to easily, rapidly and automatically communicate with each other in security by applying a near field connection protocol. Compared to other wireless communication mode, NFC works in private within a short range. RFID is mainly used in manufacturing, transporting, tracking and asset managing, while NFC plays an important role in the field of access control management, bus card identification, mobile payment and the like.

Meanwhile, NFC is a data transmission technology superior over infrared and Bluetooth transmission. As a customer-oriented exchange mechanism, NFC is more rapid, reliable and simple than infrared technology, which requires exact alignment for data transmission. Further, compared to Bluetooth technology, NFC operates within a short range and is more suitable for exchanging important data such as financial or private information. Meanwhile, Bluetooth can be used for long-distance data communication as a complementary model to work together with NFC. In fact, the rapid light NFC protocol can induce the Bluetooth pairing between two devices and facilitate the operation of Bluetooth.

NFC device has a NFC chip, which can be a part of RFID module and used as a passive tag of RFID to pay a charge or as a reader of RFID to perform data exchange and collection. NFC devices are mainly used for payment and tickets purchase, electronic ticket, smart media and data exchange or transmission, for example used as a contactless smart card, a smart card reader and a box-to-box data transmission link.

In this example, the antenna built in to the pendant body 11 is a NFC antenna.

Further, the NFC antenna is arranged in the pendant body in a manner of homocentric squares, to provide better signal effect.

As described above, the antenna is built in to the pendant body of a pendant, such that when the pendant is fixedly connected to the second connecting component of the terminal through the first connecting component, the connecting contacts in the first connecting component are contacted with the antenna in the second connecting component, which allows the communication between the antenna built in to the pendant body and the terminal. Thus, due to the built-in arrangement in a pendant separated from terminal, antenna can be disposed outside the terminal, which facilitates to solve the problem that antenna takes up room and will not increase the thickness of a mobile phone.

Additionally, since the external antenna will be designed by a third party, both the cost of mobile phones and the time taken for designing antennae can be decreased.

### Example 2

Referring to FIG. 4, a terminal 30 according to this example of the present disclosure comprises a terminal body 31 and a pendant 10 as described above in combination with FIG. 2.

As shown in FIG. 4, the antenna contacts 22 in the second connecting component (not shown in FIG. 4) will be contacted with the connecting contacts 22 in the first connecting component, when the first and second connecting components are fixedly connected with each other.

To facilitate the wiring in the terminal and the connection with the first connecting component in the pendant, the second connecting component is disposed in any one of the four corners of the terminal body 31, and the antenna contacts 32 in the second connecting component are disposed in the corner of the mainboard corresponding to the position of the second connecting component. For example, the second connecting component can be disposed in the lower right corner of the terminal body, and accordingly the antenna contacts in the second connecting component will be disposed in the lower right corner of the mainboard.

As described above, the antenna is built in to the pendant body of a pendant, such that when the pendant is fixedly connected to the second connecting component of the terminal through the first connecting component, the connecting contacts in the first connecting component are contacted with the antenna in the second connecting component, which allows the communication between the antenna built in to the pendant body and the terminal. Thus, due to the built-in arrangement in a pendant separated from terminal, antenna can be disposed outside the terminal, which facilitates to solve the problem that antenna takes up room and will not increase the thickness of a mobile phone.

Although the present disclosure has been described and illustrated in detail, it is clearly understood that the same is by way of illustration and example only and is not to be taken by way of limitation, the spirit and scope of the present disclosure being limited only by the terms of the appended claims.

## Claims

1. A pendant, comprising a pendant body and a pendant cord, wherein an antenna is built in to the pendant body, RF cables of the antenna are embedded in the pendant cord, and connecting contacts on the end of the pendant cord away from the pendent body are contacted with antenna contacts in a terminal body, such that the antenna built in to the pendant body is connected with the terminal.

2. The pendant according to claim 1, wherein the pendant further comprises a first connecting component, the connecting contacts are disposed in the first connecting component, the antenna contacts are disposed in a second connecting component of the terminal body, which is non-detachably connected to the first connecting component, and the connecting contacts in the first connecting component are connected to the antenna contacts in the second connecting component through soldering.

3. The pendant according to claim 1, wherein the pendant further comprises a first connecting component, the connecting contacts are disposed in the first connecting component, the antenna contacts are disposed in a second connecting component of the terminal body, which is detachably connected to the first connecting component, and the connecting contacts in the first connecting component will be contacted with the antenna contacts in the second connecting component when the first and second connecting components are connected with each other.

4. The pendant according to claim 3, wherein the detachable connection includes snap-fit, threading or plug-in engagement.

5. The pendant according to claim 1, wherein the pendant further comprises a first connecting component, the connecting contacts are disposed in the first connecting component, the antenna contacts are disposed in a second connecting component of the terminal body, the second connecting component is a data input/output interface of the terminal, and the first connecting component is a port corresponding to the data input/output interface, the connecting contacts in the first connecting component will be contacted with the antenna contacts in the second connecting component when the first and second connecting components are connected with each other.

6. The pendant according to claim 5, wherein the data input/output interface includes audio input/output interface, universal serial bus interface, firewire IEEE 1394 interface or power interface.

7. The pendant according to claims 1, wherein the antenna is a NFC antenna.

8. The pendant according to claim 7, wherein the NFC antenna is arranged in the pendant body in a manner of homocentric squares.

9. A terminal, comprising a terminal body and the pendant, the pendant comprising a pendant body and a pendant cord, wherein an antenna is built in to the pendant body, RF cables of the antenna are embedded in the pendant cord, and connecting contacts on the end of the pendant cord away from the pendent body are contacted with antenna contacts in a terminal body, such that the antenna built in to the pendant body is connected with the terminal.

10. The terminal according to claim 9, wherein the terminal body has a second connecting component disposed in any one of the four corners thereof, and the antenna contacts in the second connecting component are disposed in the corner of a mainboard corresponding to the position of the second connecting component.
